# FASCICULE DE BREVET EUROPEEN

(11) **EP 2 433 079 B1**
(45) Date de publication et mention de la délivrance du brevet: **20.03.2013**
(21) Numéro de dépôt: 10719361.7
(22) Date de dépôt: 18.05.2010
(51) Int. Cl.: F28D 20/02, F28D 1/053

(54) **DISPOSITIF D' ECHANGE THERMIQUE CONTENANT UN MATERIAU DE STOCKAGE THERMIQUE**
WÄRMETAUSCHER MIT WÄRMESPEICHERMATERIAL
HEAT EXCHANGE DEVICE CONTAINING HEAT STORAGE MATERIAL

(30) Priorité: 19.05.2009 FR 0902437
(43) Date de publication de la demande: 28.03.2012
(73) Titulaire: Valeo Systèmes Thermiques, 78321 Le Mesnil Saint Denis (FR)
(72) Inventeur: KARL, Stefan, F-78112 Fourqueux (FR); TAKLANTI, Abdelmajid, F-91190 Gif Sur Yvette (FR); LABASTE MAUHE, Laurent, F-92140 Clamart (FR)
(74) Mandataire: Vieillevigne, Sébastien Nicolas Bernard
(86) Numéro de dépôt international: PCT/EP2010/056777
(87) Numéro de publication internationale: WO 2010/133571

(56) Documents cités:
- DE-A1-102004 035 818
- DE-A1-102004 055 340
- FR-A- 2 878 613
- US-A1- 2005 166 632

## Description

L'invention se rapporte au domaine des dispositifs d'échange thermique, en particulier les échangeurs de chaleur, notamment pour des installations dans des véhicules automobiles. Un tel dispositif est connu par example du document DE 10 2004 035 818 A1.

Elle concerne plus particulièrement un dispositif d'échange thermique comprenant un faisceau constitué d'au moins deux tubes de circulation d'un fluide caloporteur, un intercalaire d'échange thermique et un réservoir de stockage thermique d'un matériau de stockage thermique.

Dans un tel dispositif, le faisceau de tubes a pour fonction de permettre un échange thermique entre le fluide caloporteur qui circule dans les tubes, et un fluide extérieur balayant le faisceau, par exemple un flux d'air.

Les intercalaires, notamment réalisées sous une forme ondulée, font office d'ailettes d'échange thermique. Ces intercalaires sont destinés à augmenter la surface d'échange thermique et à perturber le fluide extérieur balayant le faisceau de tubes pour augmenter les performances d'échange thermique.

Un tel dispositif d'échange thermique peut faire partie par exemple d'une installation de climatisation d'un véhicule automobile. Dans ce cas, le fluide extérieur est en général un flux d'air destiné à être soufflé dans l'habitacle du véhicule, et le fluide caloporteur est, de façon préférentielle, un fluide frigorigène. Selon cette disposition, l'échange thermique a pour objectif de rafraîchir le flux d'air soufflé.

La circulation du fluide caloporteur, à l'intérieur du circuit de climatisation, est assurée par un compresseur, en général entraîné directement par le moteur du véhicule automobile.

Par conséquent, lorsque le moteur du véhicule est à l'arrêt, la circulation du fluide caloporteur cesse et l'échange thermique entre le flux d'air et le fluide caloporteur ne peut plus s'opérer. Le flux d'air soufflé dans l'habitacle du véhicule n'est alors plus refroidi.

Cette situation est d'autant plus problématique qu'il existe maintenant des systèmes qui prévoient l'arrêt automatique du moteur lorsque le véhicule s'immobilise afin de diminuer la consommation de carburant des véhicules automobiles. Par conséquent, lorsque le moteur est arrêté, le compresseur n'est plus actionné et l'habitacle du véhicule est alors privé d'air rafraîchi entraînant une sensation d'inconfort chez les occupants du véhicule.

Pour remédier à cet inconvénient, il est connu d'associer à un dispositif d'échange thermique des réservoirs de matériaux de stockage thermique emmagasinant des calories ou des frigories lorsque le fluide caloporteur est en circulation dans le circuit, et les restituant au fluide extérieur lorsque la circulation du fluide caloporteur n'est plus assurée.

Ainsi, dans le cas particulier d'un circuit de climatisation, il est connu de pourvoir un dispositif d'échange thermique de réservoirs d'un matériau de stockage de frigories, lequel est capable d'emmagasiner des frigories lorsque le moteur est en marche et de les restituer lorsque le moteur est arrêté et que de l'air continue à être soufflé dans l'habitacle.

Des dispositifs d'échange thermique de ce type sont connus notamment d'après les demandes de brevet FR2861166, FR2878613, FR2878614 et W02006059005.

Cependant, ces dispositifs connus ont notamment pour inconvénient de nécessiter des composants spéciaux et d'être relativement complexes à fabriquer et à assembler.

En outre, s'agissant de l'application à un évaporateur de climatisation, les dispositifs connus ne peuvent pas toujours fonctionner avec des fluides frigorigènes à pression élevée, notamment dans le cadre de l'utilisation du dioxyde de carbone (CO₂) comme fluide caloporteur.

L'invention a notamment pour but de surmonter les inconvénients précités.

Elle propose à cet effet un dispositif d'échange thermique du type défini en introduction, les tubes et le réservoir de stockage thermique formant un groupe réservoir-tubes, dans lequel les tubes sont disposés suivant au moins deux rangées de tubes, en particulier en étant décalés deux à deux d'une rangée à l'autre, et ont deux grandes faces opposées qui s'étendent perpendiculairement à la direction d'extension des rangées de tubes et constituent respectivement une face de contact d'intercalaire et une face de contact de réservoir, et dans lequel le réservoir de stockage thermique s'étend transversalement aux rangées de tubes. Le réservoir de stockage thermique est en contact avec un tube de chaque rangée, le contact avec les tubes se faisant alternativement sur une première paroi du réservoir de stockage thermique et sur une seconde paroi du réservoir de stockage thermique opposée à la première paroi.

Ainsi, dans un ensemble réservoir-tubes, le réservoir de stockage thermique assure un contact, à chaque fois, avec un tube d'une rangée, le contact se faisant alternativement par la première paroi et la seconde paroi.

Autrement dit, la première paroi du réservoir de stockage thermique vient en contact avec une grande face d'un premier tube dont la grande face opposée vient en contact avec un premier intercalaire, et vient ensuite en contact directement avec le premier intercalaire. De l'autre côté, la seconde paroi du réservoir de stockage thermique vient en contact avec un second intercalaire, puis ensuite en contact avec une grande face d'un deuxième tube, dont l'autre grande face vient en contact avec un second intercalaire. Si le dispositif comprend plus de deux rangées de tubes, la même disposition se reproduit. Ainsi, dans le cas d'un dispositif à deux rangées de tubes, le réservoir de stockage thermique présente à chaque fois une forme sensiblement en 'S' aplati avec, préférentiellement, deux branches parallèles venant contourner alternativement le tube de la première rangée et le tube de la deuxième rangée.

Il en résulte l'avantage que l'on peut partir d'un dispositif d'échange thermique comprenant des tubes classiques, sous réserve que les tubes soient décalés d'une rangée à l'autre pour permettre la mise en place des réservoirs de stockage thermique, ces derniers s'étendant sur toute la largeur de l'échangeur de chaleur, c'est-à-dire perpendiculairement à la direction des rangées de tubes.

L'avantage est que l'on peut utiliser des tubes classiques pour la circulation du fluide caloporteur, en particulier des tubes résistant à la pression dans le cas où le dispositif doit constituer un évaporateur parcouru par un fluide à haute pression tel que le CO₂.

Dans une forme de réalisation préférée de l'invention, le réservoir de stockage thermique présente, sur la première paroi, au moins une face de contact de tube et au moins une face de contact d'intercalaire et, sur la seconde paroi, au moins une face de contact d'intercalaire et au moins une face de contact de tube.

Les faces de contact de tubes et les faces de contact d'intercalaire sont mutuellement décalées d'une distance correspondant à l'épaisseur d'un tube, telle que définie entre ses grandes faces, en sorte que chaque groupe réservoir-tubes est en contact, à chaque fois, alternativement avec deux intercalaires sur une grande face du tube et sur une paroi du réservoir de stockage thermique.

Il en résulte que chaque groupe réservoir-tubes offre, d'un côté, une paroi généralement plane formée de façon alternée par des parties de la première paroi du réservoir de stockage thermique et des grandes faces des tubes. La même disposition est présente sur l'autre côté. Ceci permet de réaliser un excellent contact thermique entre les différents composants, c'est-à-dire les tubes du faisceau, les réservoir de stockage thermique et les intercalaires.

I1 est avantageux que le réservoir de stockage thermique loge un intercalaire interne réalisé sous la forme d'une bande métallique présentant des plis ou ondulations afin d'améliorer l'échange thermique au sein du réservoir de stockage ther.

Selon une autre caractéristique de l'invention, le dispositif d'échange thermique comporte un conduit de remplissage communiquant avec le réservoir de stockage thermique pour les remplir en matériau de stockage thermique.

Le réservoir de stockage thermique est avantageusement formé par l'assemblage de deux plaques métalliques conformées réunies entre elles à leur périphérie par des surfaces de contact respectives, les plaques métalliques formant respectivement la première et la seconde paroi du réservoir de stockage thermique.

Selon encore une autre caractéristique de l'invention, le dispositif d'échange thermique comprend deux collecteurs communiquant avec des extrémités des tubes du faisceau. Selon une première variante, les deux collecteurs sont disposés de part et d'autre du faisceau de tubes. Alternativement, les deux collecteurs sont disposés du même coté du faisceau de tubes

Les tubes du faisceau sont, de préférence, des tubes extrudés à canaux multiples. Ceci est particulièrement intéressant lorsque le fluide caloporteur est un fluide frigorigène circulant à haute pression, comme le CO₂.

L'invention s'applique tout particulièrement au cas où le dispositif constitue un évaporateur, le fluide caloporteur étant un fluide frigorigène et le matériau de stockage thermique étant un matériau de stockage de frigories.

D'autres caractéristiques et avantages de l'invention apparaîtront à l'examen de la description qui va suivre en regard des dessins annexés, donnés à titre d'exemples non limitatifs, qui pourront servir à compléter la compréhension de la présente invention et l'exposé de sa réalisation mais aussi, le cas échéant, contribuer à sa définition sur lesquels:
- la figure 1 est une vue de face d'un dispositif d'échange thermique selon la présente invention,
- les figures 2 et 3 sont respectivement des vues en coupe selon la ligne II-II et selon la ligne III-III de la figure 1,
- la figure 4 est une vue de détail à échelle agrandie d'une partie de la figure 3,
- la figure 5 est une vue analogue à la figure 4 dans le cas d'un dispositif d'échange thermique à huit rangées de tubes,
- la figure 6 est une vue en coupe analogue à la figure 4, dans laquelle les réservoirs de stockage thermique comportent des intercalaires internes,
- la figure 7 est une vue en perspective d'un intercalaire interne,
- la figure 8 est une vue en coupe analogue à la figure 4 montrant un conduit de remplissage dans une première forme de réalisation,
- la figure 9 est une vue analogue à la figure 8 montrant le conduit de remplissage dans une variante de réalisation,
- la figure 10 est une vue de dessus d'un groupe réservoir-tubes avec un réservoir de stockage thermique constitué de deux coquilles,
- la figure 11 est une vue en coupe du groupe réservoir-tubes de la figure 10,
- les figures 12 à 14 sont respectivement des vues en coupe selon la ligne XII-XII, selon la ligne XIII-XIII et selon la ligne XIV-XIV de la figure 11,
- la figure 15 est une vue analogue à la figure 10 dans une variante de réalisation,
- la figure 16 est une vue analogue à la figure 10 dans une autre variante de réalisation,
- la figure 17 est une vue en perspective schématique d'un groupe réservoir-tubes compris entre deux intercalaires à l'état assemblé,
- la figure 18 est une vue en perspective éclatée du groupe réservoir-tubes de la figure 17,
- la figure 19 est une vue partielle en perspective éclatée montrant une partie des deux parois du réservoir de stockage thermique,
- la figure 20 est une vue en coupe transversale, d'un ensemble réservoir-tubes et d'un intercalaire, passant en dehors des bossages,
- la figure 21 est une vue en coupe transversale, d'un ensemble réservoir-tubes et d'un intercalaire, passant par deux bossages, et
- la figure 22 est une vue en coupe au niveau des orifices de remplissage du réservoir de stockage thermique.

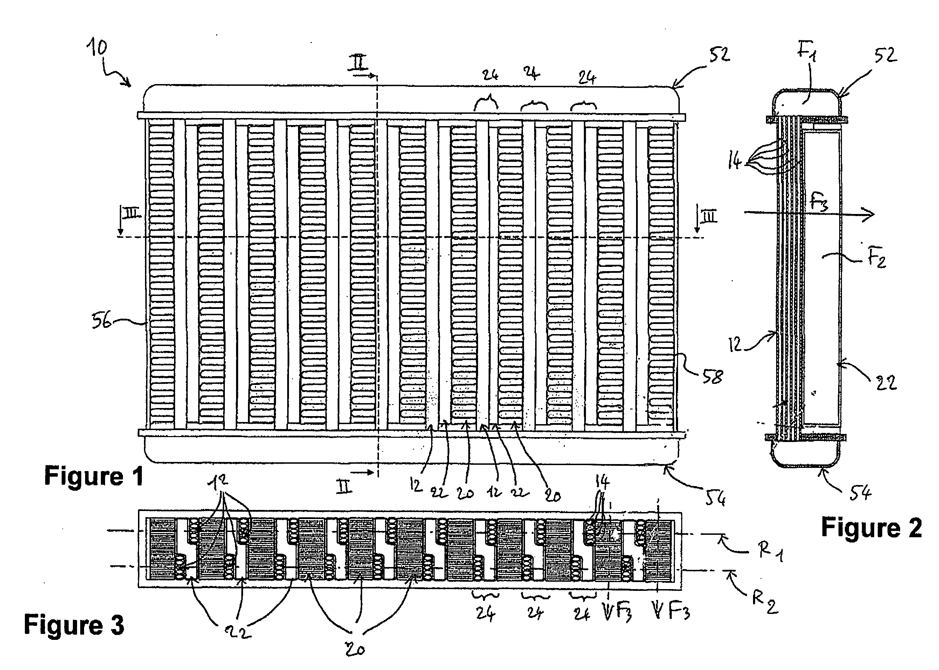

Le dispositif d'échange thermique 10, représenté sur les figures 1 à 3, comprend un faisceau de tubes 12 pour la circulation d'un fluide caloporteur F₁.

Selon un exemple préférentiel de la présente invention, le fluide caloporteur F₁ est un fluide frigorigène. Le fluide frigorigène peut subir un cycle thermodynamique entraînant un changement de phase, tel qu'un fluide fonctionnant, en tout ou partie, en mode sous-critique ou bien un fluide frigorigène pouvant subir un cycle thermodynamique n'entraînant pas de changement de phase, comme un fluide fonctionnant en mode supercritique. Le fluide frigorigène peut être constitué par du dioxyde de carbone (CO₂). Néanmoins, la présente invention trouve également une application dans le cadre de dispositifs d'échange thermique 10 parcouru par tous types de fluides, notamment les divers réfrigérants, l'eau, ...

Dans l'exemple de réalisation et tel que présenté en figure 3, les tubes 12 sont des tubes plats disposés suivant deux rangées de tubes R₁ et R₂. De façon avantageuse, les deux rangées de tubes R₁ et R₂ de tubes 12 sont disposées parallèlement entre elles. Les tubes 12 comprennent chacun une pluralité de canaux internes 14, visibles sur les figures 2 et 3. Un tel agencement en une pluralité de canaux internes 14 permet d'améliorer la résistance du tube 12 à la pression interne régnant dans le tube 12.

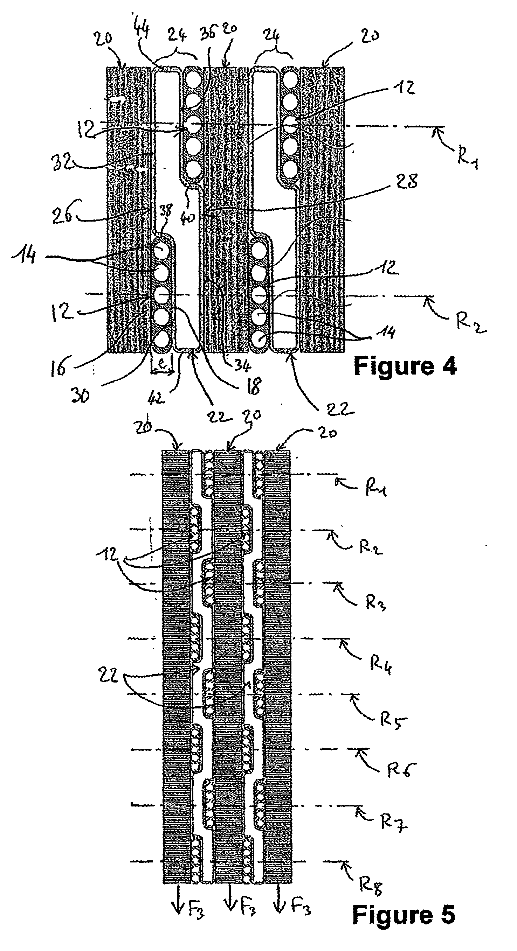

Les tubes 12 ont deux grandes faces 16 et 18 opposées, telles que présentées sur la figure 4. Les deux grandes faces 16 et 18 s'étendent perpendiculairement à la direction d'extension des rangées de tubes R₁ et R₂ de tubes 12.

Selon un mode préféré de réalisation de la présente invention, les tubes 12 sont décalés d'une rangée à l'autre, comme on peut le voir sur les figures 3, 4 et 5. Les tubes 12 sont donc agencés en quinconce sur les des rangées de tubes R₁ et R₂.

Le dispositif d'échange thermique 10 comprend également un ensemble d'intercalaires d'échange thermique 20. Les intercalaires d'échange thermique 20 présentent préférentiellement une forme ondulée classique telle que présentée sur la figure 1. Par ailleurs, le dispositif d'échange thermique 10 comprend des réservoirs de stockage thermique 22 propres à contenir un matériau de stockage thermique. Selon l'exemple de la présente invention, le matériau de stockage thermique permet d'emmagasiner des frigories. Alternativement, le matériau de stockage thermique peut avoir une composition différente lui permettant d'emmagasiner des calories.

Les réservoirs de stockage thermique 22 s'étendent transversalement aux rangées de tubes R₁ et R₂ de tubes 12, selon la disposition des figures 3 et 4. Il est formé ainsi des groupes réservoir-tube 24 dans lequel un même réservoir de stockage thermique 22 est en contact avec un tube 12 de chacune des rangées de tubes R₁ et R₂ de tubes 12. Une telle disposition est notamment visible sur la figure 3. Ainsi, chaque groupe de stockage thermique 24 comprend un réservoir de stockage thermique 22 et deux tubes 12 appartenant respectivement aux deux rangées de tubes R₁ et R₂ de tubes.

Dans l'exemple représenté sur les figures 1 à 3, le dispositif d'échange thermique 10 comprend dix groupes réservoir-tube 24 et onze intercalaires réservoir-tubes 20. Le dispositif d'échange thermique 10 comprend en outre deux collecteurs 52 et 54 dans lesquels débouchent à chaque fois des extrémités des tubes 12 du faisceau et deux joues d'extrémité 56 et 58. Les joues d'extrémité 56 et 58 encadrent latéralement le faisceau de tubes 12 et viennent chacune en contact avec un intercalaire d'échange thermique 20 situé en extrémité du faisceau de tubes 12.

Telle que présentée sur la figure 4, le réservoir de stockage thermique 22 comprend une première paroi 26, située sur le côté gauche du réservoir de stockage thermique 22 de la figure 4, et une seconde paroi 28, opposée à la première paroi 26, et située sur le côté droit du réservoir de stockage thermique 22 de la figure 4.

Les grandes faces 16 et 18 des tubes 12 forment respectivement une face de contact avec l'intercalaire d'échange thermique 20 et une face de contact avec le réservoir de stockage thermique 22. La première paroi 26 du réservoir de stockage thermique 22 comprend une face de contact de tube 30 venant en contact avec une des grandes faces 18 du tube 12, dont la grande face 16 opposée vient en contact avec un premier intercalaire d'échange thermique 20. La face de contact de tube 30 de la première paroi 26 se raccorde à une face de contact d'intercalaire 32, venant en contact avec le premier intercalaire d'échange thermique 20.

La face de contact de tube 30 et la face de contact d'intercalaire 32 de la première paroi 26 du réservoir de stockage thermique 22 sont décalées d'une distance 'e', comme indiquée sur la figure 4. La distance 'e' correspond à l'épaisseur d'un tube 12, telle que définie entre ses grandes faces 16 et 18.

Ainsi, sur le côté gauche groupe réservoir-tube 24 de la figure 4, la première paroi 26 du réservoir de stockage thermique 22 vient en contact alternativement avec une grande face 18 d'un tube 12 de la rangée R₂ et avec un intercalaire d'échange thermique 20 situé à gauche du groupe réservoir-tube 24. D'autre part, la seconde paroi 28 du réservoir de stockage thermique 22 comporte une face de contact d'intercalaire 34 venant en contact avec l'intercalaire d'échange thermique 20 situé à droite du groupe réservoir-tube 24 et une face de contact de tube 36 venant en contact avec une grande face 16 d'un tube 12 de la rangée R₁.

La face de contact de tube 30 et la face de contact d'intercalaire 32 de la première paroi 26 du réservoir de stockage thermique 22, respectivement la face de contact de tube 36 et la face de contact d'intercalaire 34 de la seconde paroi 28 du réservoir de stockage thermique 22, sont reliées ensemble par une partie de raccordement 38, respectivement une partie de raccordement 40. En outre, la face de contact de tube 30 de la première paroi 26 et la face de contact d'intercalaire 34 de la seconde paroi 28, respectivement, la face de contact de tube 36 de la seconde paroi 28 et la face de contact d'intercalaire 32 de la première paroi 26, se raccordent par une partie de raccordement 42, respectivement une partie de raccordement 44. Les parties de raccordement 42 et 44 sont généralement parallèles entre elles.

Les faces de contact de tube 30 et 36, les faces de contact d'intercalaire 32 et 34 et les parties de raccordement 38, 40, 42 et 44 forment un volume interne clos définissant le réservoir de stockage thermique 22.

Ainsi, vu en coupe, le réservoir de stockage thermique 22 présente une section s'apparentant à celle d'un 'S' dont les branches sont décalées et, préférentiellement, parallèles. I1 en résulte que le réservoir de stockage thermique 22 s'étend transversalement aux rangées de tubes R₁ et R₂ en formant, à chaque fois, un groupe réservoir-tubes 24 dans lequel un même réservoir de stockage thermique 22 est en contact avec un tube 12 de chaque rangée R₁ et R₂, le contact avec les tubes 12 se faisant alternativement sur la première paroi 26 et sur la seconde paroi 28 du réservoir de stockage thermique 22.

Le mode de réalisation des figures 1 à 4 correspond au cas d'un dispositif d'échange de chaleur à deux rangées de tubes R₁ et R₂ de tubes 12. Les réservoirs de stockage thermique 22 sont destinés à contenir un matériau de stockage thermique F₂. Dans l'exemple, le matériau de stockage thermique F₂ permet d'emmagasiner des frigories. Le faisceau de tubes 12 ainsi formé est propre à être balayé par un flux d'air F₃ circulant entre les groupes réservoir-tube 24 en passant à chaque fois au travers les intercalaires d'échange thermique 20 comme on le voit sur la figure 3.

Dans l'exemple des figures 1 à 4, le faisceau de tubes 12 comprend deux rangées de tubes R₁ et R₂ de tubes 12. Toutefois, le faisceau de tubes 12 peut comporter un nombre plus important de rangées de tubes 12. La figure 5 illustre un exemple où le faisceau de tubes 12 comprend huit rangées de tubes R₁ à R₈ de tubes 12. Dans cette configuration, chacune des premières et secondes parois 26 et 28 opposées des réservoirs de stockage thermique 22 comprend alternativement une face de contact de tube 30, respectivement 36, et une face de contact d'intercalaire 32, respectivement 34.

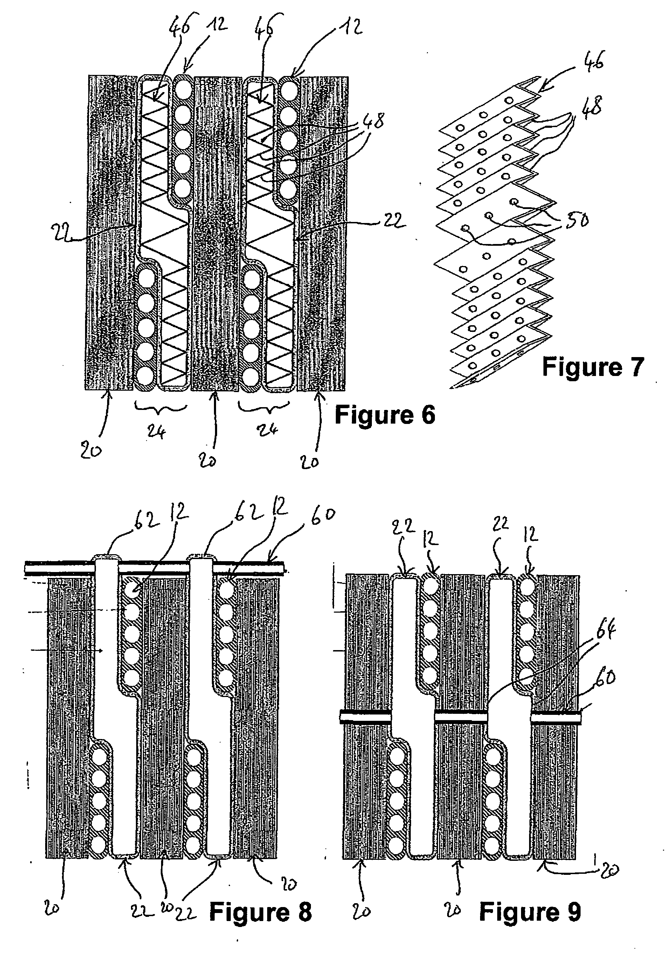

Il est fait maintenant référence aux figures 6 et 7. La figure 6 est une vue analogue à la figure 4 et présente une variante de réalisation. Dans ce mode, le réservoir de stockage thermique 22 loge un intercalaire interne 46. Avantageusement, l'intercalaire interne 46 est réalisé sous la forme d'une bande métallique présentant des plis ou ondulations 48, ici des plis en zigzag. La présence de l'intercalaire interne 46 permet d'améliorer les échanges thermiques entre le matériau de stockage thermique F₂ et les tubes 12 dans lesquels circule le fluide caloporteur F₁ et les intercalaires d'échange thermique 20 traversé le fluide extérieur, ici le flux d'air F₃.

La figure 7 présente une vue en perspective de l'intercalaire interne 46. L'intercalaire interne 46 comprend des orifices de communication 50 réalisés dans chaque ondulation 48. Les orifices de communication 50 sont répartis sur une ou plusieurs rangées agencées sur la hauteur de l'intercalaire interne 46. Les orifices de communication 50 permettent une mise en relation entre les cavités formées par l'intercalaire interne 46 dans le réservoir de stockage thermique 22 et un remplissage optimal de ces cavités par le matériau de stockage thermique F₂. En outre, les intercalaires internes 46 peuvent assurer un renfort interne des réservoirs de stockage thermique 22.

Selon l'exemple de réalisation de la figure 8, un conduit de remplissage 60 est disposé afin de communiquer avec les réservoirs de stockage thermique 22 pour les remplir en matériau de stockage thermique F₂. Le conduit de remplissage 60, par exemple de section circulaire ou autre, est situé dans la partie supérieure des réservoirs de stockage thermique 22 et parallèlement à l'un des collecteurs 52 ou 54 du dispositif d'échange thermique 10, ici le collecteur 52. Le conduit de remplissage 60 s'étend à l'extérieur du faisceau de tubes 12 et communique avec des régions d'extrémité 62 des réservoirs de stockage thermique 22, qui font saillie latéralement par rapport au faisceau de tubes 12.

La figure 9 montre une alternative d'agencement du conduit de remplissage 60 des réservoirs de stockage thermique 22. Selon ce mode de réalisation, le conduit de remplissage 60 s'étend à l'intérieur du faisceau de tubes 12 entre deux rangées de tubes 12 successives et communique avec des régions intermédiaires 64 des réservoirs de stockage thermique 22. Le conduit de remplissage 60 des figures 8 et 9 est une pièce rapportée ou bien une pièce intégrée dans un collecteur 52 ou 54 du dispositif d'échange thermique 10.

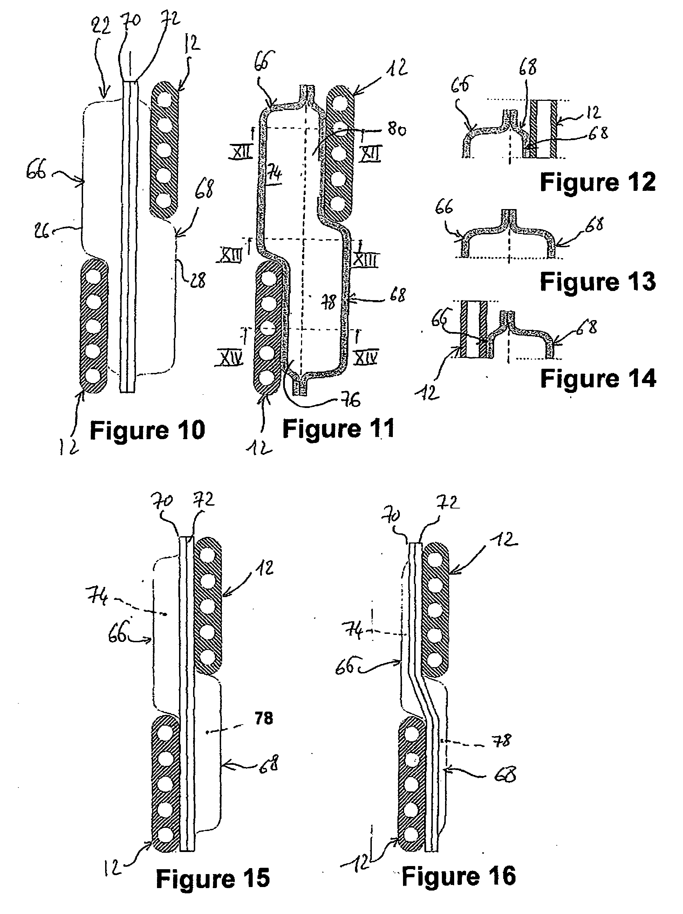

On se réfère maintenant aux figures 10 à 14. La figure 10 montre un réservoir de stockage thermique 22 formé par l'assemblage de deux plaques métalliques conformées 66 et 68 réunies entre elles à leur périphérie par des surfaces de contact respectives 70 et 72. Les plaques métalliques conformées 66 et 68 sont de préférence des plaques embouties, mais elles peuvent aussi être réalisées d'une autre façon, par exemple par moulage.

La plaque métallique conformée 66 définit deux cavités internes 74 et 76, visibles sur la figure 11. La cavité interne 74 située en contact avec l'intercalaire d'échange thermique 20 est plus importante que la cavité interne 76 située en contact avec le tube 12. De la même manière, la plaque conformée 68 comprend deux cavités internes 78 et 80, la cavité interne 78 située en contact avec l'autre intercalaire d'échange thermique 20 étant plus importante que la cavité interne 80 située en contact avec l'autre tube 12. Dans l'exemple des figures 10 à 14, selon un exemple particulier de réalisation, les cavités internes 74 et 76 ont des profondeurs différentes, de même que les cavités internes 78 et 80, et les surfaces de contact 70 et 72 respectives sont coplanaires.

Les figures 12, 13 et 14 sont des détails en coupe montrant la structure des cavités selon les lignes XII-XII, XIII-XIII et XIV-XIV de la figure 11.

La figure 15 est analogue à la figure 10 montrant une variante dans laquelle chacune des plaques conformées 66 et 68 ne comporte qu'une seule cavité à savoir respectivement une cavité 74 et une cavité 78 situées en contact avec l'intercalaire d'échange thermique 20, les surfaces de contact 70 et 72 respectives des deux plaques conformées 66 et 68 étant coplanaires.

La figure 16 montre une autre variante dans laquelle les plaques conformées 66 et 68 ont une seule cavité, savoir respectivement une cavité 74 et une cavité 78 situées en contact avec l'intercalaire d'échange thermique 20 comme dans la figure 15, et dans laquelle les surfaces de contact 70 et 72 respectives s'étendent sur deux plans parallèles reliés entre eux par un plan oblique.

La forme des cavités est adaptée à chaque fois en fonction de la position relative des tubes situés de part et d'autre du réservoir de stockage thermique 22.

Les figures 10, 15 et 16 montrent trois configurations des réservoirs de stockage thermique 22 de matériaux de stockage.

Chaque configuration présente un groupe réservoir-tube de trois largeurs différentes. En fonction de la largeur de l'ensemble, le volume de chaque réservoir de stockage thermique 22 est plus ou moins important. Pour un dispositif d'échange thermique 10 d'une hauteur, d'une largeur et d'une profondeur données, le volume total des réservoirs de stockage thermique 22 dépendra de la largeur de l'intercalaire et de la largeur d'un ensemble tubes-réservoirs.

La figure 10 montre une configuration où la distance entre les tubes 12 dans la direction des rangées de tubes, est supérieure à l'épaisseur des surfaces de contact 70 et 72 du réservoir de stockage thermique 22 du matériau de stockage thermique F₂ constitué par les plaques conformées 66 et 68. Chaque plaque conformée 66 et 68 du réservoir stockage thermique 22 comporte deux cavités 74, 76, respectivement 78 et 80, de profondeur différente. La surface de contact 70, respectivement 72, de la plaque conformée 66, respectivement 68, du réservoir stockage thermique 22 est plane.

La figure 15 montre la configuration limite où la distance entre les deux tubes 12 dans la direction des rangées de tubes est égale à l'épaisseur des surfaces de contact 70 et 72 du réservoir de stockage thermique 22 du matériau de stockage thermique F₂ constitué les plaques conformées 66 et 68 du réservoir de stockage thermique 22. Chaque plaque conformée 66, respectivement 68, du réservoir de stockage thermique 22 est formée d'une seule cavité 74, respectivement 78. La surface de contact 70, respectivement 72, de la plaque conformée 66, respectivement 68, du réservoir de stockage thermique 22 est plane.

La figure 16 montre une configuration où la distance entre les tubes 12 dans la direction des rangées de tubes ne permet pas d'avoir une surface de contact de la plaque conformée 66, respectivement 68, du réservoir de stockage thermique 22 plane. La plaque conformée 66, respectivement 68, constituant le réservoir de stockage thermique 22, est pliée pour assurer un alignement partiel avec les deux tubes 12, une cavité 74, respectivement 78, étant ensuite formée, par exemple emboutie, dans chacune des plaques conformées 66 et 68 du réservoir de stockage thermique 22.

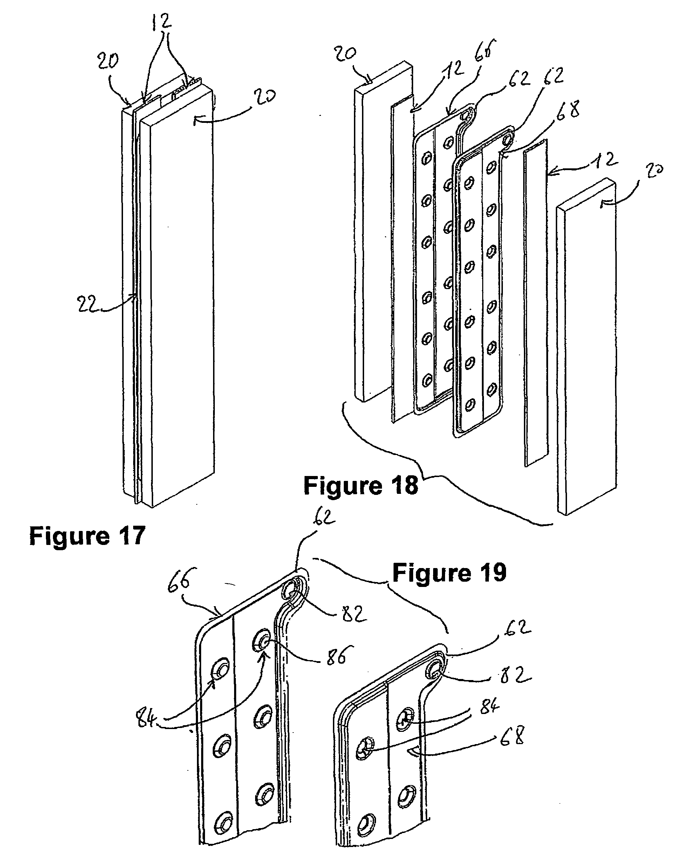

La figure 17 montre un groupe réservoir-tubes compris entre deux intercalaires d'échange thermique 20, ces derniers étant représentés schématiquement. La figure 18 montre le même groupe réservoir-tubes vu en perspective éclatée.

De manière analogue à la figure 8, chacune des plaques conformées 66 et 68, formant un réservoir de stockage thermique 22, comprend une partie d'extrémité 62 dépassant latéralement du faisceau de tubes 12 et comportant un orifice 82 pour le passage d'un conduit de remplissage 60 analogue à celui décrit précédemment.

Comme on le voit plus particulièrement sur la figure 19, les plaques conformées 66 et 68 ont des bossages internes 84. Les bossages internes 84 assurent une fonction de renfort. Dans l'exemple, les bossages internes 84 ont une forme généralement tronconique avec un fond plat 86. Dans l'exemple, chacune des plaques conformées 66 et 68 comprend six paires de bossage. Les bossages 84 de chacune des plaques conformée 66 et 68 viennent en contact deux à deux par leurs fonds respectifs 86, lesquels peuvent venir s'assembler par brasage. Ceci permet de renforcer la structure du réservoir de stockage thermique 22.

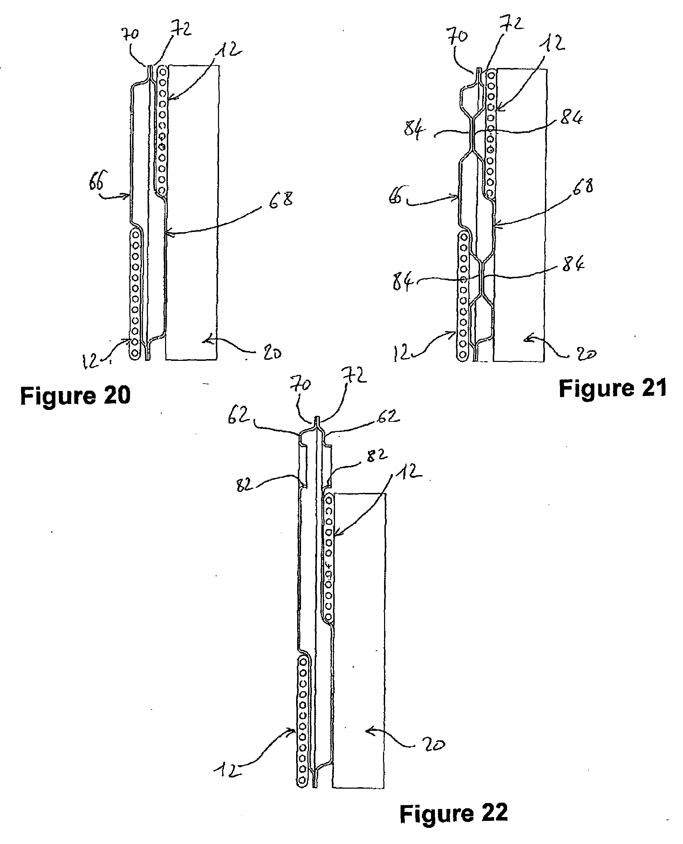

La figure 20 est une vue en coupe passant en dehors des bossages 84 et correspond à la réalisation des figures 10 à 14.

La figure 21 est une vue en coupe traversant des bossages 84 en vis-à-vis. On voit que les fonds plats 86 respectifs des bossages 84 sont en contact mutuel.

La figure 22 est une vue en coupe prise au niveau des régions d'extrémité 62. On voit les deux trous 82 destinés à recevoir un conduit de remplissage 60.

Les différents composants du dispositif d'échange thermique 10 de l'invention (tubes, intercalaires, réservoirs, collecteurs, joues, tubes de remplissage,...) sont avantageusement réalisés en aluminium ou alliage à base d'aluminium et brasés ensemble en une seule opération.

Comme déjà indiqué, les tubes 12 utilisés dans le dispositif d'échange thermique 10 pourront être des tubes standard, en particulier des tubes résistant à la pression.

Dans les modes de réalisation décrits précédemment, les tubes 12 sont des tubes extrudés à canaux multiples qui peuvent résister à des pressions élevées, typiquement de l'ordre de 300 bars, comme celles que l'on rencontre lors de l'emploi du CO₂ comme fluide frigorigéne.

L'invention s'applique tout particulièrement aux évaporateurs de climatisation, dans lesquels le fluide caloporteur est un fluide frigorigène et le matériau de stockage thermique est un matériau de stockage de frigories.

Comme matériau de stockage de frigories, on préfère utiliser des fluides à changement de phases dont la température de fusion est comprise entre 0°C et 15°C, préférentiellement entre 4°C et 8°C. On peut citer comme exemple des matériaux de la famille des paraffines, des sels hydratés et des composés eutectiques. L'invention peut aussi s'appliquer au cas où le matériau de stockage thermique est un matériau de stockage de calories.

L'invention trouve une application particulière aux échangeurs de chaleur pour véhicules automobiles.

Bien évidemment, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention et notamment toutes combinaisons des différents modes de réalisation décrits précédemment.

## Revendications

1. Dispositif d'échange thermique comprenant au moins deux tubes (12) de circulation de fluide caloporteur (F₁), un intercalaire d'échange thermique (20) et un réservoir de stockage thermique (22) d'un matériau de stockage thermique (F2), les tubes (12) et le réservoir de stockage thermique (22) formant un groupe réservoir-tubes (24),
**caractérisé en ce que** les tubes (12) sont disposés suivant au moins deux rangées de tubes (R₁, R₂, ...) et ont deux grandes faces (16 ; 18) opposées s'étendant perpendiculairement à la direction d'extension des rangées de tubes (R₁, R₂, ... ) et constituant respectivement une face de contact d'intercalaire et une face de contact de réservoir, et **en ce que** le réservoir de stockage thermique (22) s'étend transversalement aux rangées de tubes (R₁, R₂, ...) et est en contact avec un tube (12) de chaque rangée de tubes (R₁, R₂, ...), le contact avec les tubes (12) se faisant alternativement sur une première paroi (26) du réservoir de stockage thermique (22) et sur une seconde paroi (28) du réservoir de stockage thermique (22) opposée à la première paroi (26).

2. Dispositif selon la revendication 1, **caractérisé en ce que** les tubes (12) sont décalés deux à deux d'une rangée de tubes (R₁, R₂, ...) à l'autre.

3. Dispositif selon la revendication 1 ou 2, **caractérisé en ce que** les première et deuxième parois (26, 28) du réservoir de stockage thermique (22) présente respectivement au moins une face de contact de tube (30, 36) et au moins une face de contact d'intercalaire (32, 34).

4. Dispositif selon la revendication 3, **caractérisé en ce que** les faces de contact de tube (30 ; 36) et les faces de contact d'intercalaire (32 ; 34) d'une même paroi (26 ; 28) du réservoir de stockage thermique (22) sont mutuellement décalées d'une distance (e) correspondant à l'épaisseur du tube (12) définie entre les deux grandes faces (16, 18).

5. Dispositif selon l'une des revendications 1 à 4, **caractérisé en ce que** le groupe réservoir-tubes (24) est en contact avec deux intercalaires (20) alternativement par l'intermédiaire de la grande face (16, 18) d'un des tubes (12) et de la première paroi (26) ou de la seconde paroi (28) du réservoir de stockage thermique (22).

6. Dispositif selon l'une des revendications 1 à 5, **caractérisé en ce que** le réservoir de stockage thermique (22) loge un intercalaire interne (46) réalisé sous la forme d'une bande métallique présentant des plis ou ondulations (48).

7. Dispositif selon la revendication 6, **caractérisé en ce que** des orifices de communication (50) sont aménagés au travers des plis ou ondulations (48) de l'intercalaire interne (46) pour faciliter le remplissage du matériau de stockage thermique (F₂).

8. Dispositif selon l'une des revendications 1 à 7, **caractérisé en ce qu'**il comporte un conduit de remplissage (60) communiquant avec le réservoir de stockage thermique (22) pour assurer le remplissage en matériau de stockage thermique (F₂).

9. Dispositif selon la revendication 8, **caractérisé en ce que** le conduit de remplissage (60) s'étend à l'extérieur du faisceau de tubes (12) et communique avec des régions d'extrémité (62) du réservoirs de stockage thermique (22).

10. Dispositif selon la revendication 8, **caractérisé en ce que** le conduit de remplissage (60) s'étend à l'intérieur du faisceau de tubes (12), entre deux rangées de tubes (12) successives et communique avec des régions intermédiaires (64) du réservoir de stockage thermique (22).

11. Dispositif selon l'une des revendications 1 à 10, **caractérisé en ce que** le réservoir de stockage thermique (22) est formé par l'assemblage de deux plaques métalliques (66, 68) conformées et réunies entre elles à leur périphérie par des surfaces de contact (70, 72) respectives.

12. Dispositif selon la revendication 11, **caractérisé en ce que** les plaques métalliques (66 ; 68) délimitent chacune deux cavités (74, 76 ; 78, 80) de profondeurs différentes.

13. Dispositif selon la revendication 11, **caractérisé en ce que** les plaques métalliques (66 ; 68) délimitent chacune une seule cavité (74 ; 78).

14. Dispositif selon l'une des revendications 11 à 13, **caractérisé en ce que** les plaques métalliques (66 ; 68) ont des bossages internes de renfort (84).

15. Dispositif selon l'une des revendications 11 à 14, **caractérisé en ce que** les surfaces de contact (70, 72) sont coplanaires.

16. Dispositif selon l'une des revendications 11 à 14, **caractérisé en ce que** les surfaces de contact (70, 72) s'étendent sur deux plans parallèles reliés entre eux par un plan oblique.

17. Dispositif selon l'une des revendications 1 à 16, **caractérisé en ce que** le dispositif d'échange thermique (10) comprend deux collecteurs (52, 54) communiquant avec des extrémités du tube (12) du faisceau.

18. Dispositif selon l'une des revendications 1 à 17, **caractérisé en ce que** le tube (12) du faisceau est un tube extrudé à canaux multiples (14).

19. Dispositif selon l'une des revendications précédentes, **caractérisé en ce que** le dispositif d'échange thermique (10) est un évaporateur et **en ce que** le fluide caloporteur (F₁) est un fluide frigorigène et le matériau de stockage thermique (F₂) est un matériau de stockage de frigories.

## Claims

1. Heat-exchange device comprising at least two tubes (12) for the circulation of coolant (F₁), a heat-exchange insert (20) and a heat-storage reservoir (22) of a heat-storage material (F2), the tubes (12) and the heat-storage reservoir (22) forming a reservoir-tubes group (24),
**characterized in that** the tubes (12) are placed in at least two rows of tubes (R₁, R₂, ...) and have two large opposite faces (16; 18) extending perpendicularly to the direction of extension of the rows of tubes (R₁, R₂, ...) and forming respectively an insert contact face and a reservoir contact face, and **in that** the heat-storage reservoir (22) extends transversely to the rows of tubes (R₁, R₂, ...) and is in contact with a tube (12) of each row of tubes (R₁, R₂, ...), the contact with the tubes (12) being made alternately on a first wall (26) of the heat-storage reservoir (22) and on a second wall (28) of the heat-storage reservoir (22) opposite to the first wall (26).

2. Device according to Claim 1, **characterized in that** the tubes (12) are offset in twos from one row of tubes (R₁, R₂, ...) to the other.

3. Device according to Claim 1 or 2, **characterized in that** the first and second walls (26, 28) of the heat-storage reservoir (22) have respectively at least one tube contact face (30, 36) and at least one insert contact face (32, 34).

4. Device according to Claim 3, **characterized in that** the tube contact faces (30; 36) and the insert contact faces (32; 34) of one and the same wall (26; 28) of the heat-storage reservoir (22) are mutually offset by a distance (e) corresponding to the thickness of the tube (12) defined between the two large faces (16, 18).

5. Device according to one of Claims 1 to 4, **characterized in that** the reservoir-tubes group (24) is in contact with two inserts (20) alternately by means of the large face (16, 18) of one of the tubes (12) and of the first wall (26) or of the second wall (28) of the heat-storage reservoir (22).

6. Device according to one of Claims 1 to 5, **characterized in that** the heat-storage reservoir (22) houses an internal insert (46) made in the form of a metal hand having folds or undulations (48).

7. Device according to Claim 6, **characterized in that** communication orifices (50) are arranged through the folds or undulations (48) of the internal insert (46) in order to make the filling of the heat-storage material (F₂) easier.

8. Device according to one of Claims 1 to 7, **characterized in that** it comprises a filling duct (60) communicating with the heat-storage reservoir (22) in order to ensure the filling with heal-storage material (F₂).

9. Device according to Claim 8, **characterized in that** the filling duct (60) extends outside the bundle of tubes (12) and communicates with end regions (62) of the heat-storage reservoir (22).

10. Device according to Claim 8, **characterized in that** the filling duct (60) extends inside the bundle of tubes (12) between two successive rows of Lubes (12) and communicates with intermediate regions (64) of the heat-storage reservoir (22).

11. Device according to one of Claims 1 to 10, **characterized in that** the heat-storage reservoir (22) is formed by the assembly of two metal plates (66, 68) formed and joined together at their periphery by respective contact surfaces (70, 72).

12. Device according to Claim 11, **characterized in that** the metal plates (66; 68) each delimit two cavities (74, 76; 78, 80) of different depths.

13. Device according to Claim 11, **characterized in that** the metal plates (66; 68) each delimit a single cavity (74; 78).

14. Device according to one of Claims 11 to 13, **characterized in that** the metal plates (66; 68) have internal reinforcing bosses (84).

15. Device according to one of Claims 11 to 14, **characterized in that** the contact surfaces (70, 72) are coplanar.

16. Device according to one of Claims 11 to 14, **characterized in that** the contact surfaces (70, 72) extend on two parallel planes connected together by an oblique plane.

17. Device according to one of Claims 1 to 16, **characterized in that** the heat-exchange device (10) comprises two collectors (52, 54) communicating with ends of the tube (12) of the bundle.

18. Device according to one of Claims 1 to 17, **characterized in that** the tube (12) of the bundle is an extruded tube with multiple channels (14).

19. Device according to one of the preceding claims, **characterized in that** the heat-exchange device (10) is an evaporator and **in that** the coolant (F₁) is a refrigerant and the heat-storage material (F₂) is a material for storing frigories.

## Patentansprüche

1. Wärmetauschvorrichtung, umfassend mindestens zwei Rohre (12) für die Zirkulation eines flüssigen Kühlmittels (F₁), eine Wärmeaustauschzwischenlage (20) und einen Wärmespeicherbehälter (22) für ein warmespeichermaterial (F₂), wobei die Rohre (12) und der Wärmespeicherbehälter (22) eine Behälter-Rohr-Gruppe (24) bilden,
**dadurch gekennzeichnet, dass** die Rohre (12) entlang mindestens zweier Rohrreihen (R₁, R₂,...) angeordnet sind und zwei lange Seiten (16; 18) aufweisen, die einander gegenüberliegen und sich senkrecht zur Ausdehnungsrichtung der Rohrreihen (R₁, R₂,...) erstrecken und jeweils eine Kontaktseite der Zwischenlage und eine Kontaktseite des Rehälters darstellen, und dass sich der Wärmespeicherbehälter (22) quer zu den Rohrreihen (R₁, R₂,...) erstreckt und mit einem Rohr (12) jeder Rohrreihe (R₁, R₂,...) in Kontakt ist, wobei der Kontakt mit den Rohren (12) alternativ an einer ersten Wand (26) des Wärmespeicherbehälters (22) und an einer zweiten Wand (28) des Wärmespeicherbehälters (22), die der ersten Wand (26) gegenüberliegt, erfolgt.

2. Vorrichtung nach Anspruch 1, **dadurch gekennzeichnet, dass** die Rohre (12) paarweise von einer Rohrreihe (R₁, R₂,...) zur nächsten versetzt sind.

3. Vorrichtung nach Anspruch 1 oder 2, dadurch gekenntzeichnet, dass die erste und die zweite Wand (26, 28) des Wärmespeicherbehälters (22) mindestens eine Rohrkontaktfläche (30, 36) bzw. mindestens eine Zwischenlagenkontaktfläche (32, 34) aufweisen.

4. Vorrichtung nach Anspruch 3, **dadurch gekennzeichnet, dass** die Rohrkontaktflächen (30; 36) und die Zwischenlagenkontaktflächen (32; 34) einer selbe Wand (26; 28) des Wärmespeicherbehälters (22) wechselseitig um einen Abstand (e) versetzt sind, der der Dicke des Rohrs (12) entspricht, die zwischen den heiden langen Seiten (16, 18) definiert ist.

5. Vorrichtung nach einem der Ansprüche 1 bis 4, **dadurch gekennzeichnet, dass** die Rohr-Behälter-Gruppe (24) mit zwei Zwischenlagen (20) alternativ mittels der langen Seite (16, 18) eines der Rohre (12) und der ersten Wand (26) oder der zweiten Wand (28) des Wärmespeiaherbehälters (22) in Kontakt ist.

6. Vorrichtung nach einem der Ansprüche 1 bis b, **dadurch gekennzeichnet, dass** der Wärmespeicherbehälter (22) eine innere Zwischenlage (46) umfasst, die in Form eines Metallbandes ausgeführt ist, das Falten oder wellen (48) aufweist.

7. Vorrichtung nach Anspruch 6, **dadurch gekennzeichnet, dass** Verbindungsöffnungen (50) durch die Falten oder Wellen (48) der inneren Zwischenlage (46) hindurchgehen, um das Einfüllen des Wärmespeichermaterials (F₂) zu erleichtern.

8. Vorrichtung nach einem der Ansprüche 1 bis 7, **dadurch gekennzeichnet, dass** sie eine Befüllungsleitung (60) umfasst, die mit dem warmespeicherbehälter (22) in Verbindung steht, um das Befüllen mit Wärmespeichermaterial (F₂) zu gewährleisten.

9. Vorrichtung nach Anspruch 8, **dadurch gekennzeichnet, dass** sich die Befüllungsleltung (60) außerhalb des Rohrbündels (12) erstreckt und mit Endbereichen (62) des Wärmespeicherbehälters (22) in Verbindung steht.

10. Vorrichtung nach Anspruch 8, **dadurch gekennzeichnet, dass** sich die Befüllungsleitung (60) innerhalb des Rohrbündels (12) zwischen zwei aufeinander folgenden Rohrreihen (12) erstreckt und mit Zwischenbereichen (64) des Wärmespeicherbehälters (22) in Verbindung steht.

11. Vorrichtung nach einem der Ansprüche 1 bis 10, **dadurch gekennzeichnet, dass** der Wärmespeicherbehälter (22) durch die Zusammenfügung von zwei Metallplatten (66, 68) hergestellt ist, die aneinander angepasst und durch jeweilige Kontaktflächen (70, 72) an ihrer Peripherie miteinander verbunden sind.

12. Vorrichtung nach Anspruch 11, dadurch gekennzeinhnet, dass die Metallplatten (66; 68) jeweils zwei Hohlräume (74, 76; 78, 8C) unterschiedlicher Tiefen begrenzen.

13. Vorrichtung nach Anspruch 11, **dadurch gekennzeichnet, dass** die Metallplatten (66; 68) jeweils nur einen Hohlraum (74; 78) begrenzen.

14. Vorrichtung nach einem der Ansprüche 11 bis 13, **dadurch gekennzeichnet, dass** die Metallplatten (66; 68) innere verstärkungswülste (84) aufweisen.

15. Vorrichtung nach einem der Ansprüche 11 bis 14, **dadurch gekennzeichnet, dass** die Kontaktflächen (70, 72) koplanar sind.

16. Vorrichtung nach einem der Ansprüche 11 his 14, **dadurch gekennzeichnet, dass** sich die Kontaktflächen (70, 72) auf zwei parallelen Ebenen erstrecken, die miteinander durch eine schräge Ebene verbunden sind.

17. Vorrichtung nach einem der Ansprüche 1 bis 16, **dadurch gekennzeichnet, dass** die Wärmetausahvorrichtung (10) zwei Kollektoren (52, 54) umfasst, die mit Enden des Rohrs (12) des Bündels in Verbindung stehen.

18. Vorrichtung nach einem der Ansprüche 1 bis 17, **dadurch gekennzeichnet, dass** das Rohr (12) des Bündels ein extrudiertes Rohr mit mehreren Kanälen (14) ist.

19. Vorrichtung nach einem der vorhergehenden Ansprüche, **dadurch gekennzeichnet, dass** die Wärmetauschvorrichtung (10) ein Verdampfer ist, und dass das flüssige Kühlmittel (F₁) ein Kältefluid ist, und dass das Wärmeipeichermaterial (F₂) ein Kalorienspeichermaterial ist.
